(19) Europäisches Patentamt
European Patent Office
Office européen des brevets

(11) **EP 3 838 858 A1**

(12) **EUROPEAN PATENT APPLICATION**

(43) Date of publication:
**23.06.2021 Bulletin 2021/25**

(51) Int Cl.:
*C03C 3/087* (2006.01)  *C03C 3/097* (2006.01)
*C03C 4/00* (2006.01)  *C03C 10/14* (2006.01)
*C03C 21/00* (2006.01)

(21) Application number: **20214805.2**

(22) Date of filing: **17.12.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **20.12.2019 KR 20190171904**

(71) Applicant: **Samsung Display Co., Ltd.**
**Yongin-si**
**Gyeonggi-do**
**17113 (KR)**

(72) Inventors:
• **Lee, Hoi Kwan**
**705-606 Gyeonggi-do, (KR)**
• **Kim, Min Ki**
**2105-1202 Gyeonggi-do (KR)**
• **Kim, Byeong Beom**
**CALLA-301 Chungcheongnam-do (KR)**
• **Kim, Yu Ri**
**303-1104 Gyeonggi-do (KR)**
• **Seo, Woo Suk**
**605-402 Gyeonggi-do (KR)**

(74) Representative: **Dr. Weitzel & Partner**
**Patent- und Rechtsanwälte mbB**
**Friedenstrasse 10**
**89522 Heidenheim (DE)**

(54) **GLASS ARTICLE AND DISPLAY DEVICE INCLUDING THE SAME**

(57)    A glass article includes: a glass phase including a first structure in which a silicon atom is covalently bonded to four first oxygen atoms; and a plurality of crystals dispersed in the glass phase. The crystals include beta-quartz crystals, each of the beta-quartz crystals includes the first structure and a second structure in which aluminum is covalently bonded to four second oxygen atoms, and a crystallinity of the beta-quartz crystals is in a range of about 40% to about 50%.

FIG.3

EP 3 838 858 A1

**Description**

BACKGROUND

1. Field

Embodiments of the invention relate to a glass article and a display device including the glass article.

2. Description of the Related Art

Glass articles are widely used in electronic devices including display devices, building materials, and the like. For example, a glass article is applied to a substrate of a flat panel display device such as a liquid crystal display, an organic light emitting display or an electrophoretic display, or to a cover window for protecting the display device.

As portable electronic devices such as smartphones and tablet personal computers ("PC"s) increase, glass articles applied to such devices are frequently exposed to external impact. In such portable electronic devices, thin glass articles are desired for user convenience (e.g., portability). However, the glass articles are also desired to have appropriate strength.

SUMMARY

A tempered glass article having a compressive region formed in a surface to mitigate the propagation of cracks may be used for a portable electronic device. However, it may not be easy to form the compressive region to an appropriate compression depth with a short process time while thinning the glass article and forming the glass article to have appropriate strength.

An embodiment of the invention provides a glass article which is thin and has appropriate strength and in which an appropriate compressive region can be formed during a short process time.

Another embodiment of the invention provides a display device including a glass article which is thin and has appropriate strength and in which an appropriate compressive region can be formed during a short process time.

According to an embodiment, a glass article includes a glass phase including a first structure in which a silicon atom is covalently bonded to four first oxygen atoms; and a plurality of crystals dispersed in the glass phase, where the crystals include beta-quartz crystals, each of the beta-quartz crystals includes the first structure and a second structure in which an aluminum atom is covalently bonded to four second oxygen atoms, and a crystallinity of the beta-quartz crystals is in a range of about 40% to about 50%. That is, the glass article is preferably partially crystalline or semi-crystalline, with maximum the half of its structure or less than the half of its structure in a crystalline form, especially 40% to 50% of its structure in the crystalline form.

The crystals dispersed in the glass phase may be mainly or totality in the form of beta-quartz crystals.

In an embodiment, each of the crystals may further include a first alkali metal which is bonded to the aluminum atom covalently bonded to the four second oxygen atoms.

In an embodiment, the bond between the first alkali metal and the aluminum atom may include a bond formed through an electrostatic attraction.

In an embodiment, each of the crystals may further include a second alkali metal which is covalently bonded to a third oxygen atom.

In an embodiment, the glass phase may further include a third alkali metal which is covalently bonded to a fourth oxygen atom.

In an embodiment, the glass article may include a first surface, a second surface opposite to the first surface, a first compressive region extending from the first surface to a point at a first compression depth from the first surface, a second compressive region extending from the second surface to a point at a second compression depth from the second surface, and a tensile region disposed between the first compressive region and the second compressive region, where the crystals may be dispersed in each of the first compressive region, the second compressive region and the tensile region.

In an embodiment, a bond between the first alkali metal and the aluminum atom may be weaker than a bond between the second alkali metal and the third oxygen.

In an embodiment, the bond between the first alkali metal and the aluminum atom may be weaker than a bond between the third alkali metal and the fourth oxygen.

In an embodiment, the first alkali metal may include lithium or sodium.

In an embodiment, the crystallinity of the beta-quartz crystals may be determined by X-ray diffraction, especially by Rietveld analysis.

In an embodiment, the glass article may further include a nucleating agent which includes $TiO_2$ or $ZrO_2$, where

the beta-quartz crystals may be formed through the nucleating agent.

In an embodiment, a transmittance of for a light in a visible spectrum of about 400 nanometers (nm) to about 700 nm.

In an embodiment, a difference between a refractive index of the glass phase and a refractive index of the crystals may be less than about 0.06.

In an embodiment, a size of each crystal may be in a range of about 20 nm to about 30 nm.

In an embodiment, a fracture toughness of the glass article may be about 1.0 megapascal square root meter ($MPa \cdot m^{1/2}$) or greater.

According to an embodiment, a glass article includes a display device including: a display panel which includes a plurality of pixels; a cover window which is disposed on the display panel; and an optically clear bonding layer which is disposed between the display panel and the cover window. In such an embodiment, the cover window includes: a glass phase including a first structure in which a silicon atom is covalently bonded to four first oxygen atoms; and a plurality of crystals dispersed in the glass phase and including the first structure and a second structure in which an aluminum atom is covalently bonded to four second oxygen atoms, where the crystals include beta-quartz crystals, and a crystallinity of the crystals is in a range of about 40% to about 50%. That is, the cover window is a glass article which is preferably partially crystalline or semi-crystalline, with maximum the half of its structure or less than the half of its structure in a crystalline form, especially 40% to 50% of its structure in the crystalline form.

The crystals dispersed in the glass phase may be mainly or totality in the form of beta-quartz crystals.

In an embodiment, each of the crystals may further include a first alkali metal which is bonded to the aluminum atom covalently bonded to the four second oxygen atoms.

In an embodiment, a bond between the first alkali metal and the aluminum atom may include a bond formed through an electrostatic attraction.

In an embodiment, each of the crystals may further include a second alkali metal which is covalently bonded to a third oxygen atom.

In an embodiment, the glass phase may further include a third alkali metal which is covalently bonded to a fourth oxygen atom.

BRIEF DESCRIPTION OF THE DRAWINGS

These and/or other features of the invention will become apparent and more readily appreciated from the following description of the embodiments, taken in conjunction with the accompanying drawings in which:

FIG. 1 is a perspective view of glass articles according to various embodiments;
FIG. 2 is a cross-sectional view illustrating an embodiment of a display device in which a glass article is applied as a cover window thereof;
FIG. 3 is a cross-sectional view of a flat plate-shaped glass article according to an embodiment;
FIG. 4 is a graph illustrating a stress profile of a glass article according to an embodiment;
FIG. 5 is a structural formula showing the structure of a crystal of a glass article according to an embodiment;
FIG. 6 is a structural formula showing the structure of a glass phase of a glass article according to an embodiment;
FIG. 7 is a schematic diagram illustrating an ion exchange process according to an embodiment;
FIG. 8 is a schematic diagram illustrating the path of light passing through a glass article according to an embodiment;
FIG. 9 is an enlarged view of region A of FIG. 8;
FIG. 10 illustrates embodiments of a glass article with various crystallinity and before and after being tempered;
FIG. 11 is a graph illustrating the degree of thermal expansion in embodiments of a glass article with various crystallinity of crystals;
FIG. 12 is a graph illustrating the rate of compression depth formation in embodiments of a glass article with various crystallinity of crystals and various ion exchange temperature; and
FIG. 13 is a graph illustrating an X-ray diffraction ("XRD") analysis method for determining the crystallinity of crystals according to an embodiment.

DETAILED DESCRIPTION

The invention will now be described more fully hereinafter with reference to the accompanying drawings, in which various embodiments of the invention are shown. This invention may, however, be embodied in different forms and should not be construed as limited to the embodiments set forth herein. Rather, these embodiments are provided so that this disclosure will be thorough and complete, and will filly convey the scope of the invention to those skilled in the art.

It will be understood that when a layer is referred to as being "on" another layer or substrate, it can be directly on the other layer or substrate, or intervening layers may also be present. In contrast, when an element is referred to as being "directly on" another element, there are no intervening elements present.

It will be understood that when an element is referred to as being related to another element such as being "coupled" or "connected" to another element, it can be directly coupled or connected to the other element or intervening elements may be present therebetween. In contrast, it should be understood that when an element is referred to as being related to another element such as being "directly coupled" or "directly connected" to another element, there are no intervening elements present. Other expressions that explain the relationship between elements, such as "between," "directly between," "adjacent to," or "directly adjacent to," should be construed in the same way.

Throughout the specification, the same reference numerals will refer to the same or like parts.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise. "At least one" is not to be construed as limiting "a" or "an." "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within $\pm$ 30%, 20%, 10% or 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

Hereinafter, embodiments of the invention will be described in detail with reference to the accompanying drawings.

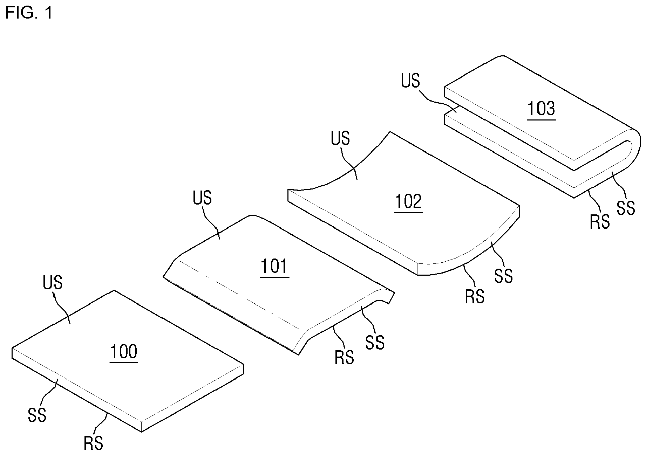

FIG. 1 is a perspective view of glass articles according to various embodiments.

A glass article may be used as a cover window for protecting a display panel, a substrate for a display panel, a substrate for a touch panel, an optical member such as a light guide plate, etc. in electronic devices including displays such as tablet personal computers ("PC"s), laptop computers, smartphones, electronic books, televisions and PC monitors as well as refrigerators and washing machines including display screens. A glass article may also be used for cover glass of vehicle dashboards, cover glass of solar cells, building interior materials, and windows of buildings or houses.

Some glass articles may be desired to have strong strength. In one embodiment, for example, where a glass articles is used as windows, the window may be desired to be thin to have high transmittance and light weight but also desired to be strong enough not to be easily broken by external impact. Glass articles with increased strength may be produced using a method such as chemical tempering or thermal tempering. Embodiments of a tempered glass having various shapes are illustrated in FIG. 1.

Referring to FIG. 1, in an embodiment, a glass article 100 may be in a shape of a flat sheet or a flat plate. In alternative embodiments, a glass article 101, 102 or 103 may have a three-dimensional shape including a bent part. In one embodiment, for example, a glass article may include a flat part whose edges are bent (see '101'), may be curved overall (see '102'), or may be folded (see '103').

Embodiments of the glass article 100 through 103 may have a rectangular planar shape. However, each shape of embodiments the glass articles 100 through 103 is not limited to the rectangular planar shape and may be variously modified to have one of other planar shapes such as a rectangle with rounded corners, a square, a circle, and an ellipse. Hereinafter, for convenience of description, embodiments where the glass article is in a shape of a flat plate having a rectangular planar shape will be described in detail, but not being limited thereto.

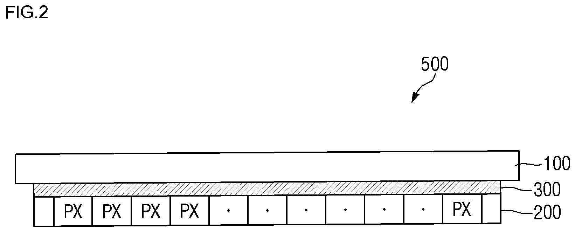

FIG. 2 is a cross-sectional view illustrating an example in which a glass article according to an embodiment is applied as a cover window 100 of a display device 500.

Referring to FIG. 2, the display device 500 may include a display panel 200, the cover window 100 disposed on the display panel 200, and an optically clear bonding layer 300 disposed between the display panel 200 and the cover window 100 to bond the display panel 200 and the cover window 100 together.

The display panel 200 may be, for example, a self-luminous display panel such as an organic light emitting display panel ("OLED"), an inorganic electroluminescent ("EL") display panel, a quantum dot light emitting display panel, a micro-light emitting diode (:LED") display panel, a nano-LED display panel, a plasma display panel ("PDP"), a field emission display panel ("FED") or a cathode ray tube ("CRT") display panel or may be a light receiving display panel such as a liquid crystal display ("LCD") panel or an electrophoretic display ("EPD") panel.

The display panel 200 may include a plurality of pixels PX and may display an image using light emitted from each pixel PX. The display device 500 may further include a touch member (not illustrated). In an embodiment, the touch member may be internalized in the display panel 200. In one embodiment, for example, the touch member may be formed directly on a display member of the display panel 200 such that the touch member may be defined as an element of the display panel 200 to perform a touch function. In an alternative embodiment, the touch member may be manufactured separately from the display panel 200 and then attached to an upper surface of the display panel 200 by an optically clear bonding layer.

The cover window 100 is disposed on the display panel 200. The cover window 100 protects the display panel 200. In an embodiment, a reinforced or strengthened glass article may be applied as a body of the cover window 100. The cover window 100 may be larger in size than the display panel 200. Thus, side surfaces of the cover window 100 may protrude further out than side surfaces of the display panel 200, but embodiments are not limited thereto. The cover window 100 may further include a print layer disposed on at least one surface of the glass article 100 at edges of the glass article 100. The print layer of the cover window 100 may prevent a bezel region of the display device 500 from being visible from the outside and may selectively or optionally perform a decorative function.

The optically clear bonding layer 300 is disposed between the display panel 200 and the cover window 100. The optically clear bonding layer 300 fixes the cover window 100 on the display panel 200. The optically clear bonding layer 300 may include an optical clear adhesive ("OCA") or an optical clear resin ("OCR").

A glass composition of the glass article 100 may include various compositions known in the art. In an embodiment, the glass composition may include a lithium-alumina-silicon ("LAS") glass ceramic containing lithium aluminosilicate.

In one embodiment, for example, the glass composition may contain 50 to 80 mol% $SiO_2$, 1 to 30 mol% $Al_2O_3$, 0 to 5 mol% $B_2O_3$, 0 to 4 mol% $P_2O_5$, 3 to 20 mol% $Li_2O$, 0 to 20 mol% $Na_2O$, 0 to 10 mol% $K_2O$, 3 to 20 mol% $MgO$, 0 to 20 mol% $CaO$, 0 to 20 mol% $SrO$, 0 to 15 mol% $BaO$, 0 to 10 mol% $ZnO$, 0 to 1 mol% $TiO_2$, and 0 to 8 mol% $ZrO_2$. Here, "0 mol%" means that a corresponding component is not substantially contained. When the composition does not "substantially contain" a specific component, it means that the specific component is not intentionally contained in a raw material and includes a case where a trace, e.g., 0.1 mol% or less of impurities are inevitably contained.

Each component of the glass composition will now be described in greater detail. $SiO_2$ may serve to form the framework of glass, increase chemical durability, and reduce generation of cracks due to scratches (indentations) on the glass surface. In an embodiment, $SiO_2$ may be contained in an amount of about 50 mol% or greater to effectively form the framework of glass, increase chemical durability, and reduce generation of cracks. In an embodiment, $SiO_2$ may be contained in the glass composition in an amount of 80 mol% or less to exhibit sufficient meltability.

$Al_2O_3$ may act as an active component that improves ion exchange performance during chemical tempering and increases surface compressive stress after the tempering. In an embodiment, $Al_2O_3$ may be contained in an amount of about 1 mol% or greater to allow $Al_2O_3$ to effectively perform the above functions. In an embodiment, the content of $Al_2O_3$ may be about 30 mol% or less to maintain acid resistance and meltability of glass.

$B_2O_3$ improves chipping resistance and meltability of glass. In an embodiment, $B_2O_3$ may be omitted (0 mol%). Alternatively, $B_2O_3$ may be contained in an amount of about 0.5 mol% or greater to further improve meltability of glass. In such an embodiment, $B_2O_3$ may be contained in an amount of about 5 mol% or less to suppress the generation of striae during melting.

$P_2O_5$ improves ion exchange performance and chipping resistance. In an embodiment, $P_2O_5$ may be omitted (0 mol%). Alternatively, $P_2O_5$ may be contained in an amount of about 0.5 mol% or greater to effectively perform the above functions. In such an embodiment, $P_2O_5$ may be contained in an amount of about 4 mol% or less to prevent a significant reduction in acid resistance.

$Li_2O$ serves to form surface compressive stress through ion exchange. Li ions disposed near the glass surface can be exchanged for Na ions through an ion exchange process. In an embodiment, $Li_2O_3$ content for effective ion exchange is about 3 mol% or greater, and $Li_2O_3$ content may be about 20 mol% or less from a perspective of acid resistance.

$Na_2O$ serves to form surface compressive stress through ion exchange and improve meltability of glass. Na ions disposed near the glass surface can be exchanged for K ions through an ion exchange process. In an embodiment, $Na_2O$ may be omitted. Alternatively, $Na_2O$ may be contained in an amount of about 1 mol% or greater to effectively form surface compressive stress through ion exchange and improve meltability of glass. In an embodiment, where there is only a Li-Na ion exchange process is performed without any K ion exchange process, the content of $Na_2O$ may be about 8 mol% or less to facilitate the Li-Na ion exchange. In an embodiment where the K ion exchange process is performed, a greater amount of $Na_2O$ may be used. In such an embodiment, the content of $Na_2O$ may be about 20 mol% or less from a perspective of acid resistance.

$K_2O$ serves to improve ion exchange performance. In an embodiment, $K_2O$ may be omitted (0 mol%). Alternatively, $K_2O$ may be contained in an amount of about 0.5 mol% or greater to improve the ion exchange performance. In such an embodiment, $K_2O$ content may be 10 mol% or less for preventing an excessive increase in debris.

MgO serves to increase surface compressive stress of chemically tempered glass. In an embodiment, the content of MgO is about 3 mol% or greater to effectively increase surface compressive stress of chemically tempered glass. In such an embodiment, MgO content may be about 20 mol% or less to reduce the probability of devitrification during glass melting.

CaO serves to improve meltability of glass. In an embodiment, CaO may be omitted (0 mol%). Alternatively, CaO may be contained in an amount of about 0.5 mol% or greater to effectively improve meltability of glass. In such an embodiment, since too high CaO content may degrade ion exchange performance, the content of CaO may be about 20 mol% or less.

SrO, like CaO, serves to improve meltability of glass. In an embodiment, SrO may be omitted (0 mol%). Alternatively, SrO may be contained in an amount of about 0.5 mol% or greater to effectively improve meltability of glass. In such an embodiment, since too high SrO content may degrade ion exchange performance, the content of SrO may be about 20 mol% or less.

BaO serves to improve meltability and crushability of glass. In an embodiment, BaO may be omitted (0 mol%). Alternatively, BaO may be contained in an amount of about 0.5 mol% or greater to effectively improve meltability and crushability of glass. In such an embodiment, BaO content may be about 15 mol% or less to prevent excessive degradation of ion exchange performance.

ZnO serves to improve meltability of glass. In an embodiment, ZnO may be omitted (0 mol%). Alternatively, ZnO may be contained in an amount of about 0.25 mol% or greater to effectively improve meltability of glass. in such an embodiment, the content of ZnO may be about 10 mol% or less to prevent a reduction in weather resistance.

The glass composition may selectively include components such as $Y_2O_3$, $La_2O_3$, $Nb_2O_5$, $Ta_2O_5$, and $Gd_2O_3$, in addition to the components described above. The composition of the glass article 100 may be changed through a molding process or an ion exchange process to be described later.

If a thickness of the glass article 100 is reduced for thinning, strength characteristics such as fracture toughness ($K_{IC}$) and compressive stress of the glass article 100 may be reduced. Therefore, thinning may make the glass article 100 vulnerable to external stress such as fracture toughness. In an embodiment, a crystallization process or a tempering process of the glass article 100 including the above glass composition may be performed to increase the fracture toughness of the glass article 100, which will be described later.

The tempered glass article 100 will now be described in greater detail.

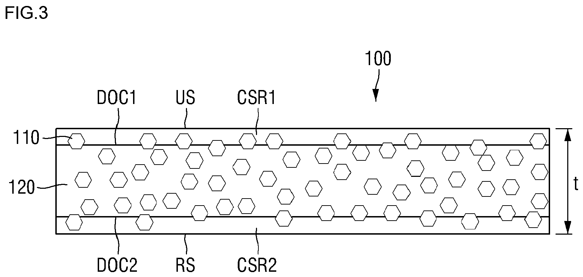

FIG. 3 is a cross-sectional view of a flat plate-shaped glass article 100 according to an embodiment.

Referring to FIG. 3, an embodiment of the glass article 100 may include a first surface US, a second surface RS, and side surfaces (SS in FIG. 1). The first surface US and the second surface RS of the flat plate-shaped glass article 100 are main surfaces having a large area, and the side surfaces are outer surfaces connecting the first surface US and the second surface RS.

The first surface US and the second surface RS face away from each other in a thickness direction. In an embodiment where the glass article 100 serves to transmit light, e.g., when used as a cover window 100 of a display, the light may usually be incident on any one of the first surface US and the second surface RS and then transmitted to the other surface of the first surface US and the second surface RS.

A thickness t of the glass article 100 is defined as a distance between the first surface US and the second surface RS. The thickness t of the glass article 100 may be, but is not limited to, in a range of 0.1 millimeter (mm) to 2mm. In an embodiment, the thickness t of the glass article 100 may be about 0.8 mm or less. In an embodiment, the thickness t of the glass article 10 may be about 0.75 mm or less. In an embodiment, the thickness t of the glass article 100 may be about 0.7 mm or less. In an embodiment, the thickness t of the glass article 100 may be about 0.6 mm or less. In an embodiment, the thickness t of the glass article 100 may be about 0.65 mm or less. In an embodiment, the thickness t of the glass article 100 may be about 0.5 mm or less. In an embodiment, the thickness t of the glass article 100 may be about 0.3 mm or less. In one embodiment, for example, the thickness t of the glass article 100 may be in a range of about 0.45 mm to about 0.8 mm or in a range of about 0.5 mm to about 0.75 mm. The glass article 100 may have a uniform thickness t, not being limited thereto. Alternatively, the glass article 100 may have regions having different thicknesses from each other.

In an embodiment, the glass article 100 may be tempered to have a predetermined stress profile therein. The glass article 100 after being tempered may more effectively prevent crack generation, crack propagation, and breakage due to external impact than the glass article 100 before being tempered. The glass article 100 tempered through a tempering process may have various stresses in each region. In one embodiment, for example, compressive regions CSR1 and CSR2, in which compressive stress acts, may be disposed near the surface of the glass article 100, that is, near the first surface US and the second surface RS, and a tensile region CTR in which tensile stress acts may be disposed inside the glass article 100. A stress value may be zero at a boundary between each of the compressive regions CSR1 and CSR2 and the tensile region CTR. The compressive stress in one compressive region CSR1 or CSR2 may have a different stress value according to the position (i.e., the depth of a point from the surface). In such an embodiment, the tensile region CTR may have a different stress value according to the depth from the surface US or RS.

Positions of the compressive regions CSR1 and CSR2 in the glass article 100, stress profiles in the compressive regions CSR1 and CSR2, compressive energies of the compressive regions CSR1 and CSR2 or tensile energy of the tensile region CTR, and the like affect mechanical properties such as surface strength of the glass article 100.

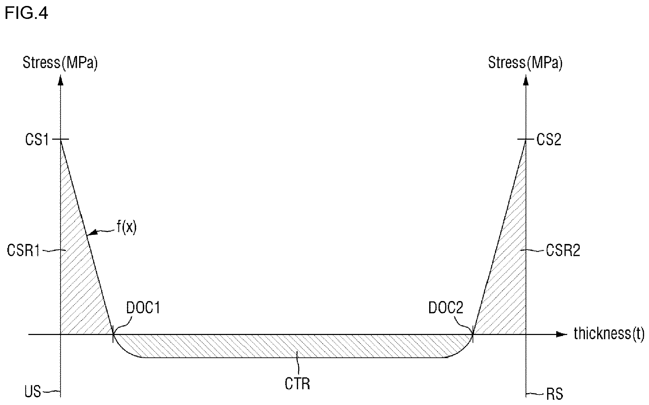

FIG. 4 is a graph illustrating a stress profile of a glass article 100 according to an embodiment. In the graph of FIG. 4, x axis represents the thickness (t) direction of the glass article 100, and y axis represent. In FIG. 4, compressive stress is indicated by a positive value, and tensile stress is indicated by a negative value. Herein, the magnitude of the compressive/tensile stress denotes the magnitude of an absolute value without regard to the sign of the value.

Referring to FIGS. 3 and 4, the glass article 100 includes a first compressive region CSR1 extending from a first surface US to a point at a first depth (a first compression depth DOC1) from the first surface US and a second compressive region CSR2 extending from a second surface RS to a point at a second depth (a second compression depth DOC2) from the second surface RS. A tensile region CTR is disposed between the first compressive region CSR1and the second compressive region CSR2, that is, between the first compression depth DOC1 and the second compression depth DOC2. Although not illustrated in FIG. 3, a compressive region and a tensile region may also be disposed in a similar manner between two opposing side surfaces SS of the glass article 100 (shown in FIG. 1).

The first compressive region CSR1 and the second compressive region CSR2 resist external impact to mitigate generation of cracks in the glass article 100 or breakage of the glass article 100. In an embodiment, the greater the maximum compressive stresses CS1 and CS2 of the first and second compressive regions CSR1 and CSR2 are, the greater the strength of the glass article 100 become. Since external impact is usually transmitted through the surfaces US, RS and SS of the glass article 100, it is desired in terms of durability to have the maximum compressive stresses CS1 and CS2 at the surfaces US, RS and SS of the glass article 100. The maximum compressive stresses CS1 and CS2 of the first and second compressive regions CSR1 and CSR2 may be about 700 megapascals (Mpa) or greater. In an embodiment, the maximum compressive stresses CS1 and CS2 of the first and second compressive regions CSR1 and CSR2 may be in a range of about 800 MPa to about 1050 MPa. In one embodiment, for example, the maximum compressive stresses CS1 and CS2 of the first and second compressive regions CSR1 and CSR2 may be in a range of about 850 MPa to about 1000 MPa.

The first compression depth DOC1 and the second compression depth DOC2 prevent cracks or grooves formed in the first and second surfaces US and RS from propagating to the tensile region CTR inside the glass article 100. The greater the first and second compression depths DOC1 and DOC2 are, the more effectively the propagation of cracks may be prevented.

The first and second compression depths DOC1 and DOC2 may be in a range of about 20 micrometers ($\mu$m) to about 150 $\mu$m. In an embodiment, the first and second compression depths DOC1 and DOC2 may be in a range of about 50 $\mu$m to about 100 $\mu$m. In one embodiment, for example, the first and second compression depths DOC1 and DOC2 may be in a range of about 70 $\mu$m to about 85 $\mu$m.

In some embodiments, the first and second compression depths DOC1 and DOC2 may satisfy the following relation about the thickness t of the glass article 100.

$$DOC1, DOC2 \geq 0.1 * t \qquad \dots(1).$$

In an embodiment, as shown in FIG. 4, the compressive stresses of the first compressive regions CSR1 and the second compressive region CSR2 are greatest (see CS 1 and CS2) at the surfaces US and RS and are reduced as being toward the inside of the glass article 100. Such a stress profile may be made through an ion exchange process. The ion exchange process is a process of exchanging ions inside the glass article 100 with other ions. The ion exchange process may allow ions located on or near the surfaces US, RS and SS of the glass article 100 to be replaced or exchanged for larger ions having the same valence or oxidation state. In one embodiment, for example, where the glass article 100 includes a monovalent alkali metal such as lithium or lithium ions ($Li^+$), sodium or sodium ions ($Na^+$), potassium or potassium ions ($K^+$), or rubidium or rubidium ions ($Rb^+$), monovalent cations on the surface may be exchanged for sodium or sodium ions ($Na^+$), potassium or potassium ions ($K^+$), rubidium or rubidium ions ($Rb^+$), or cesium or cesium ions ($Cs^+$) having a larger ion radius.

Such a tempering process of the glass article 100 may improve strength characteristics such as fracture toughness ($K_{IC}$) and compressive stress of the glass article 100.

In an embodiment, as illustrated in FIG. 3, the glass article 100 including the glass composition described above may include a glass phase 120 and crystals 110 dispersed in the glass phase 120. The glass phase 120 may mean a main phase that forms the glass article 100. The main phase, as used herein, may mean an initial phase/ source phase of the glass article 100 molded from the glass composition. In the glass phase 120 of the glass article 100, some glass compositions constituting the glass phase 120 may be disposed in an amorphous state. The amorphous state, as used herein, is different from the state of the crystals 110 and may mean that the glass compositions of the glass phase 120 form a non-crystalline state without forming certain crystals.

The crystals 110 may be a phase obtained from the glass phase 120, which is the main phase, through a crystallization process including a predetermined heat/pressure treatment. In an embodiment, the crystals 110 may be formed by performing a crystallization process on the glass phase 120, which is the initial phase of the glass article 100, by further using a nucleating agent. The nucleating agent is a kind of catalyst capable of self-nucleating and may promote nucleation to form the crystals 110. The nucleating agent may be, but is not limited to, ZnO, $ZrO_2$, $TiO_2$, titanium, platinum, gold, or rhodium.

In an embodiment, the glass article 100 may include a plurality of crystals 110. The crystals 110 may be dispersed in the glass phase 120. The crystals 110 may be dispersed over the first and second compressive regions CSR1 and CSR2 and the tensile region CTR of the glass article 100.

The crystals 110 dispersed in the glass phase 120 may serve to increase the fracture toughness ($K_{IC}$) of the glass article 100.

In an embodiment, a crystal 110 may be a beta-quartz crystal. The crystal 110 may have a three-dimensional hexagonal structure. The crystal 110 may have a structural formula of ($Li_2$, R)O-$Al_2O_3$-$nSiO_2$, where R=$Mg^{2+}$, $Zn^{2+}$, $n$=2 to 10. The crystal 110 may be formed through a crystallization process in which a heat treatment is performed at a temperature in a range of about 760 °C to about 800 °C for about 2 hours.

In an alternative embodiment, the crystal 110 may be a $Li_2OSiO_2$ crystal. In such an embodiment, where the crystal 110 is a $Li_2OSiO_2$ crystal, a heat treatment may be performed at a different temperature for a different process time from those in the crystallization process performed to produce the beta-quartz crystal.

A structure of the glass phase 120 (hereinafter, a second structure) and a structure of the crystals 110 (hereinafter, a first structure) may be different from each other. That is, the first structure and the second structure may be different from each other. The first structure and the second structure will be described later in greater detail.

Fracture toughness ($K_{IC}$) may be measured using a Vickers method widely known in the art. Here, a tip is made of diamond, the weight of the tip is about 4.9 newton (N), the size of the tip is about 19 $\mu$m, and the thickness of the glass article 100 is about 1 mm.

In a case where a glass article is composed only of the glass phase 120, the fracture toughness of the glass article may be about 0.66 megapascal square root meter (Mpa·m$^{1/2}$). In an embodiment, where the glass article 100 includes the crystals 110 and the glass phase 120 and crystallinity of the crystals 110 to be described later is in a range of about 40 % to about 50% (before being tempered), the fracture toughness of the glass article 100 may be about 1.0 Mpa·m$^{1/2}$ or greater.

The fracture toughness of the glass article composed only of the glass phase 120 and went through a tempering process without going through a crystallization process was measured to be about 0.7 Mpa·m$^{1/2}$ which is lower than that of an embodiment of the glass article 100 including the crystals 110 and the glass phase 120 and in which the crystallinity of the crystals 110 was in a range of about 40 % to about 50%.

Accordingly, the fracture toughness of an embodiment of the glass article 100 including the crystals 110 and the glass phase 120 and in which the crystallinity of the crystals 110 is in a range of about 40 % to about 50% is improved.

Therefore, it can be seen that while each of the tempering process and the crystallization process of the glass article 100 improves the strength characteristics, in particular, the fracture toughness of the glass article 100, the crystallization process has a greater effect on improving the fracture toughness of the glass article 100.

The degree of ion exchange in the above tempering process may be affected by tempering time, tempering temperature, the type of molten salt, the material and state of the glass article 100 before being tempered, and the like. Crystals of the glass article 100 that has gone through the crystallization process may physically hinder relatively small ions inside the glass article 100 from being exchanged for relatively large ions of the molten salt. That is, in the glass article 100 including crystals, the ion exchange process of the tempering process may occur less actively.

More specifically, crystals dispersed in the glass phase 120 of the glass article 100 that has gone through the crystallization process may serve to physically hinder a process of exchanging relatively small ions inside the glass article 100 with other relatively large ions. Therefore, it may not be easy to form the first compression depth DOC1 and the second compression depth DOC2 which prevent cracks or grooves formed in the first and second surfaces US and RS from propagating to the tensile region CTR inside the glass article 100. That is, a glass article that is formed by a crystallization process to includes crystal in the glass phase 120 may have smaller compression depths DOC1 and DOC2 for a same process time than a glass article that has not gone through the crystallization process and includes only the glass phase 120.

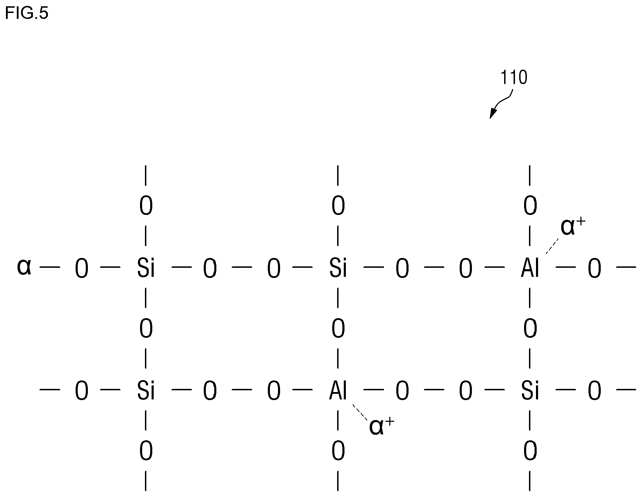

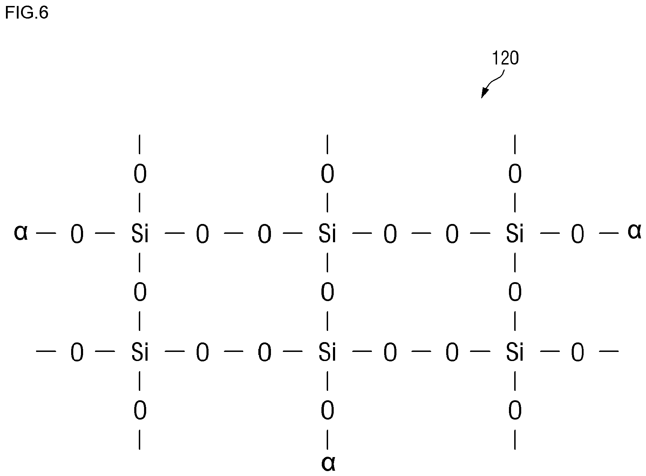

In an embodiment, the crystals 110 of the glass article 100 may be beta-quartz crystals and may serve to form the glass article 100 such that ion exchange with molten salt may be facilitated. This will hereinafter be described in detail with reference to FIGS. 5 and 6.

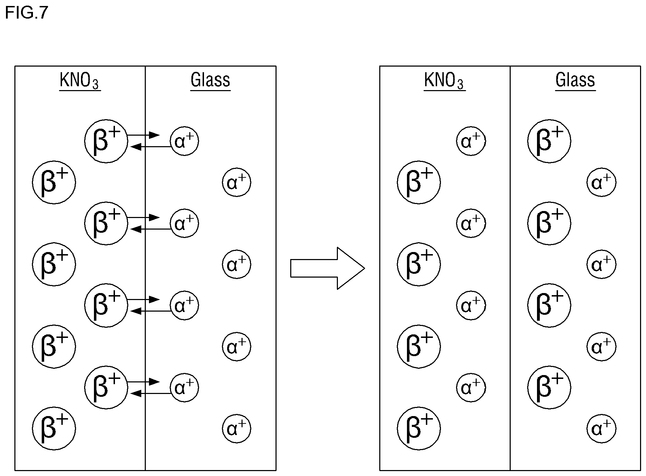

FIG. 5 is a structural formula showing the structure of a crystal 110 of a glass article according to an embodiment. FIG. 6 is a structural formula showing the structure of a glass phase 120 of a glass article according to an embodiment. FIG. 7 is a schematic diagram illustrating an ion exchange process according to an embodiment.

In FIGS. 5 and 6, $\alpha$ may be a relatively small ion or atom of a glass article 100 which is exchanged for a relatively large ion or atom of molten salt in the above-described tempering process. In an embodiment, $\alpha$ may be lithium or a lithium ion ($Li^+$), sodium or a sodium ion ($Na^+$), potassium or a potassium ion ($K^+$), rubidium or a rubidium ion ($Rb^+$), or cesium or a cesium ion ($Cs^+$). In an embodiment, $\alpha$ may be an alkali metal.

Referring to FIGS. 5 through 7, in an embodiment, the crystal 110 may have a first structure, and the glass phase 120 may have a second structure. The first structure and the second structure may be different.

Each of the first structure of the crystal 110 and the second structure of the glass phase 120 may include a structure in which each silicon or silicon atom (Si), which is a tetravalent atom, is covalently bonded to four oxygen or oxygen atoms (O).

In the second structure of the glass phase 120, $\alpha$ may form a first bond with oxygen or an oxygen atom (O) covalently bonded to silicon or a silicon atom (Si). The first bond may be classified as a covalent bond or an ionic bond according to a difference in electronegativity between $\alpha$ and oxygen or an oxygen atom (O) that forms the first bond with $\alpha$.

Likewise, in the first structure of the crystal 110, $\alpha$ may form the first bond with an oxygen atom covalently bonded to silicon or a silicon atom (Si). In the first structure of the crystal 110, however, some aluminum or aluminum atoms (Al) may be covalently bonded to four oxygen or oxygen atoms (O) by replacing silicon or silicon atoms (Si).

Since the valence or oxidation state of aluminum or aluminum atoms (Al) is tetravalent, $\alpha^+$ having a monovalent valence or oxidation state may form a second bond with aluminum or an aluminum atom (Al) to achieve an electron balance of the aluminum or aluminum atom (Al) covalently bonded to four oxygen or oxygen atoms (O). The second bond may be formed through an electrostatic attraction. The second bond between $\alpha^+$ and aluminum or an aluminum atom (Al) may be a relatively weak bond. The second bond may be weaker than the first bond. Since the second bond is relatively weak, the second bond between $\alpha^+$ and aluminum or an aluminum atom (Al) may be easily broken, and $\alpha^+$ in the broken second bond may be ion-exchanged for $\beta$ in an ion exchange process.

The $\beta$ may be a relatively large ion or atom of the glass article 100 for which a relatively small ion or atom ($\gamma$) of the glass article 100 is ion-exchanged in the above-described tempering process. In an embodiment, the $\beta$ may be sodium or a sodium ion ($Na^+$), potassium or a potassium ion ($K^+$), rubidium or a rubidium ion ($Rb^+$), or cesium or a cesium ion ($Cs^+$). The $\beta$ may be an alkali metal that is larger than $\alpha$.

In an embodiment, as shown in FIG. 7, when glass containing $\alpha^+$ is exposed to $\beta^+$ by, for example, immersing the glass in a molten salt bath containing potassium nitrate, $\alpha^+$ inside the glass may be discharged to the outside, and $\beta^+$ may take the place of $a^+$. The $\beta^+$ replacing $\alpha^+$ generates compressive stress because the ion radius of $\beta^+$ is greater than that of $\alpha^+$. The greater the amount of $\beta^+$ is, the greater the compressive stress becomes. Since ion exchange occurs through the glass surface, the amount of $\beta^+$ may be the largest on the glass surface. Some of the $\beta^+$ may increase the depth of a compressive region, that is, a compression depth as the $\beta^+$ diffuse into the glass. However, the amount of $\beta^+$ may generally decrease as the distance from the surface increases. Therefore, the glass may have a stress profile in which compressive stress is greatest at the surface and decreases toward the inside of the glass. However, embodiments are not limited thereof, and the stress profile may vary depending on the temperature, the process time, the number of the processes, presence or absence of a heat treatment, etc. of the ion exchange process.

Although the glass article 100 includes a plurality of crystals 110 dispersed in the glass phase 120 and capable of physically hindering ion exchange in a tempering process, the second bond between $\alpha^+$ and aluminum or an aluminum atom (Al) is weak and thus may be easily broken, and $\alpha^+$ in the broken second bond may be ion-exchanged for $\beta$ in an ion exchange process as described above. Therefore, an embodiment of the glass article 100 that is formed by a crystallization process and includes the crystals 110 in the glass phase 120 may have greater compression depths DOC1 and DOC2 for a same process time than a glass article that has not gone through the crystallization process and includes only the glass phase 120.

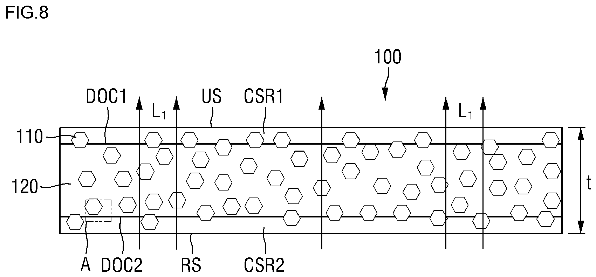

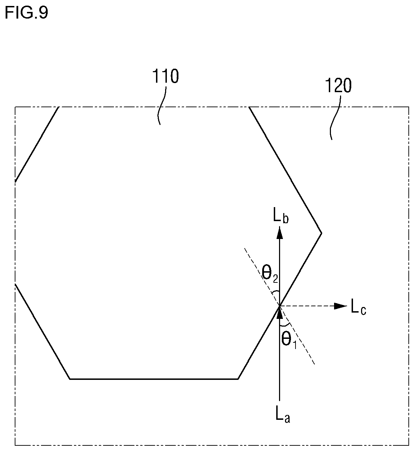

FIG. 8 is a diagram illustrating the path of light passing through a glass article 100 according to an embodiment. FIG. 9 is an enlarged view of region A of FIG. 8. Light L1 illustrated in FIGS. 8 and 9 may be light generated from the display panel 200 illustrated in FIG. 2. The light L1 may include light in a visible spectrum of about 400 nanometers (nm) to about 700 nm.

Referring to FIGS. 8 and 9, an embodiment of the glass article 100 may function as the cover window 100 of the display device 500 as described above. Therefore, the cover window 100 located on an outer surface of the display device 500 may effectively transmit the light L1 generated from the display panel 200. In an embodiment, light transmittance of the glass article 100 for light in a visible wavelength range may be about 87% or greater. In one embodiment, for example, the glass article 100 may have a light transmittance of about 90% or greater with a thickness of about 1.1 mm and a light transmittance of about 97% or greater with a thickness of about 5 mm.

The light transmittance of the glass article 100 is related to the size of each crystal 110 inside the glass article 100 and a difference in refractive index between the crystals 110 and a glass phase 120. The light transmittance of the glass article 100 may typically be inversely proportional to the size of each crystal 110 and inversely proportional to the magnitude of the difference in refractive index between the crystals 110 and the glass phase 120.

The refractive index of the glass phase 120 may not be greatly different from that of each crystal 110. The difference between the refractive index of the glass phase 120 and the refractive index of each crystal 110 may be less than about 0.6, less than about 0.4, less than about 0.3, or less than about 0.2. In one embodiment, for example, the refractive index of the glass phase 120 may be about 1.5, and the refractive index of each crystal 110 may be greater than about 1.5 and less than about 2.0.

In such an embodiment, where the difference between the refractive index of the glass phase 120 and the refractive index of each crystal 110 is substantially less as described above, the light L1 may not be substantially affected by an interface between the glass phase 120 and each crystal 110 as an optical interface. Thus, the path of the light L1 may be substantially unchanged. Here, 'substantially unchanged' means that light may be viewed as being substantially optically straight because there is virtually no difference between an incidence angle of light entering the interface between the glass phase 120 and a crystal 110 from the glass phase 120 and a refraction angle of light going into the crystal 110 from the interface.

In an embodiment, as illustrated in FIG. 9, the light L1 may include first light La incident to a crystal 110 through the glass phase 120, second light Lb actually entering into the crystal 110 among the first light La, and third light LC reflected at the interface between the glass phase 120 and the crystal 110 among the first light La. In such an embodiment, as described above, there may be virtually no difference between an incidence angle $\theta1$ of the first light La entering the interface between the glass phase 120 and the crystal 110 from the glass phase 120 and a refraction angle $\theta2$ of the second light Lb going into the crystal 110 from the interface. In such an embodiment, since the first light La is not substantially optically affected by the interface between the glass phase 120 and the crystal 110, there may be virtually no third light Lc reflected at the interface.

The size of a crystal 110 is related to the fracture toughness ($K_{IC}$) described above. As the size of the crystal 110 increases, resistance to external stress increases, thereby increasing the fracture toughness ($K_{IC}$). Since the difference between the refractive index of the glass phase 120 and the refractive index of the crystal 110 is substantially minimal as described above, the light L1 is not substantially affected by the interface between the glass phase 120 and the crystal 110 as an optical interface. Therefore, even if the size of the crystal 110 increases, light transmittance of the glass article 100 for the light L1 may not be reduced. In an embodiment, the crystal 110 may have a size in a range of about 20 nm to about 30 nm. When referred to herein, the crystal size may be measured or determined for example by laser diffraction analysis, imaging particle analysis or dynamic light scattering. Other known methods available are microscope counting aerosol mass spectrometry or sieve analysis.

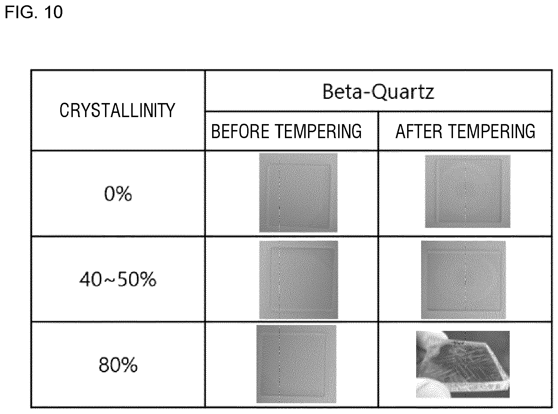

FIG. 10 illustrates embodiments of a glass article with various crystallinity of crystals and before and after being tempered.

Hereinafter, preparation examples corresponding to embodiments shown in FIG. 10 will be described in detail.

Preparation Example 1: preparation of tempered glass (1)

A plurality of 1.0 mm-thick, plate-shaped glass substrates having a lithium-aluminosilicate composition and having different crystallinity were prepared and divided into sample group #1, sample group #2, and sample group #3, respectively. Then, a chemical tempering process was performed on each sample group. The crystallinity of crystals was 0% in sample group #1, 40% to 50% in sample group #2, and 80% in sample group #3. A glass composition of each sample group contained 66 mol% $SiO_2$, 22 mol% $Al_2O_3$, 4.5 mol% $LiO_2$, 1 mol% MgO, 1 mol% $P_2O_3$, 0.5 mol% $Na_2O$, 0.5 mol% $K_2O$, 2 mol% $TiO_2$, and 2.5 mol% $ZrO_2$. The crystals of each sample group were beta-quartz crystals, and the crystal size was 30 nm.

Specifically, the glass substrates were immersed in a molten salt bath in which potassium nitrate and sodium nitrate were mixed in a salt ratio of 80:20, and an ion exchange process was performed at 460 °C for two hours.

Preparation Example 2: preparation of tempered glass (2)

An ion exchange process was performed under the same conditions as Preparation Example 1 except that the tempering temperature condition of each sample group was 480 °C.

Preparation Example 3: preparation of tempered glass (3)

An ion exchange process was performed under the same conditions as Preparation Example 1 except that the tempering temperature condition of each sample group was 500 °C.

The stress and compression depth at each position in the thickness direction of glass tempered in each of Preparation Examples 1 through 3 were measured using a surface stress meter FSM-6000, manufactured by Orihara Industrial Co., Ltd. (Japan), and a scattered light polariscope ("SCALP"), and the results are shown in Tables 1 and 2 and FIG. 10.

[Table 1]

| Sample group (CS(Mpa)) | #1 | #2 | #3 |
|---|---|---|---|
| 460°C | 703 | 521 | -43 |
| 480°C | 684 | 609 | -44 |
| 500°C | 650 | 568 | -1.5 |

[Table 2]

| Sample group (DOC(um)) | #1 | #2 | #3 |
|---|---|---|---|
| 460°C | 6.7 | 8 | 48 |
| 480°C | 7.9 | 10.8 | 2.3 |
| 500°C | 11.3 | 14.5 | 93 |

Referring to FIG. 10, it can be seen that sample group #3 tempered at 460 °C, 480 °C and 500 °C had cracks in the glass surface.

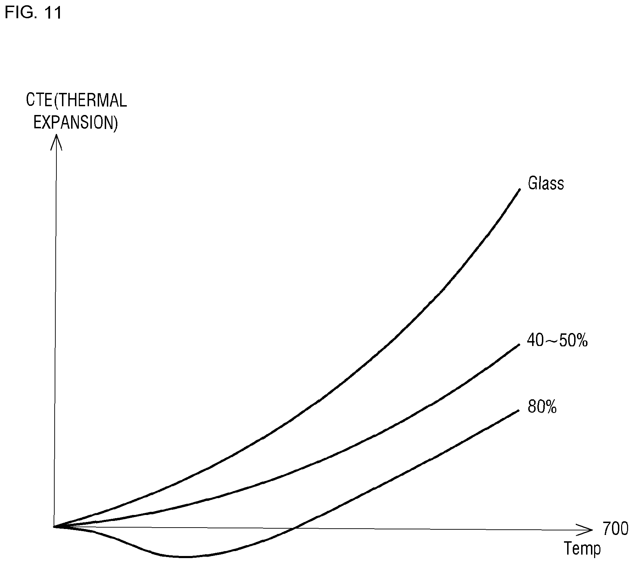

FIG. 11 is a graph illustrating the degree of thermal expansion in embodiments of a glass article with various crystallinity of crystals. In FIG. 11, the x axis represents temperature (°C), and the y axis represents thermal expansion coefficient CTE.

Referring to FIG. 11, the thermal expansion coefficient CTE of glass whose crystals have a crystallinity of 0% (sample #1 in Preparation Examples 1 and 2) increases as the temperature increases. The thermal expansion coefficient CTE of glass whose crystals have a crystallinity of 40% to 50% (sample #2 in Preparation Examples 1 and 2) increases as the temperature increases. Glass whose crystals have a crystallinity of 80% or greater (sample #3 in Preparation Examples 1 and 2) has a section in which the thermal expansion coefficient CTE decreases slightly as the temperature increases. The temperature range in which the thermal expansion coefficient CTE decreases slightly as the temperature of the glass whose crystals have a crystallinity of 80% or greater (sample #3 in Preparation Examples 1 and 2) increases includes 460 °C to 500 °C which were ion exchange temperatures in Preparation Examples 1 and 2.

The thermal expansion coefficient CTE of glass may be related to the degree of ion exchange. The thermal expansion coefficient CTE of glass may indicate the characteristic of the glass to expand or increase in volume when heated. When the thermal expansion coefficient CTE of glass has a negative value, the volume of the glass may decrease in a temperature range in which the thermal expansion coefficient CTE has a negative value. Accordingly, during ion exchange, relatively small monovalent ions of the glass may not be replaced with relatively large monovalent ions of molten salt. Otherwise, when the relatively small monovalent ions of the glass are replaced with the relatively large monovalent ions of the molten salt, large stress may be generated due to the reduced volume of the glass, resulting in the formation of cracks in the glass as illustrated in FIG. 10.

Preparation Example 4: preparation of tempered glass (4)

A plurality of 5.0 mm-thick, plate-shaped glass substrates having a lithium-aluminosilicate composition and having different crystallinity were prepared and divided into sample group #4, sample group #5, and sample group #6, respectively. Then, a chemical tempering process was performed on each sample group. The crystallinity of crystals was 0% in sample group #4, 40% to 50% in sample group #5, and 80% in sample group #6. An ion exchange process was performed under the same conditions as Preparation Example 1 except that a glass composition of each sample group contained 64 mol% $SiO_2$, 22 mol% $Al_2O_3$, 3.5 mol% $LiO_2$, 1 mol% $MgO$, 1.5 mol% $ZnO$, 0.5 mol% $Na_2O$, 0.5 mol% $K_2O$, 2.5 mol% $BaO$, 0.5 mol% $CaO$, 2.5 mol% $TiO_2$, and 1.5 mol% $ZrO_2$.

Preparation Example 5: preparation of tempered glass (5)

An ion exchange process was performed under the same conditions as Preparation Example 4 except that the tempering temperature condition of each sample group was 480 °C.

Preparation Example 6: preparation of tempered glass (6)

An ion exchange process was performed under the same conditions as Preparation Example 4 except that the tempering temperature condition of each sample group was 500 °C.

It was found that after the ion exchange process in Preparation Examples 4 through 6, sample group #6 tempered at 460 °C, 480 °C and 500 °C had cracks in the glass surface, as in Preparation Examples 1 through 3. The reason that surface cracks occurred in sample group #6 is the same as that described above with reference to FIGS. 10 and 11, and thus any repetitive detailed description thereof will be omitted.

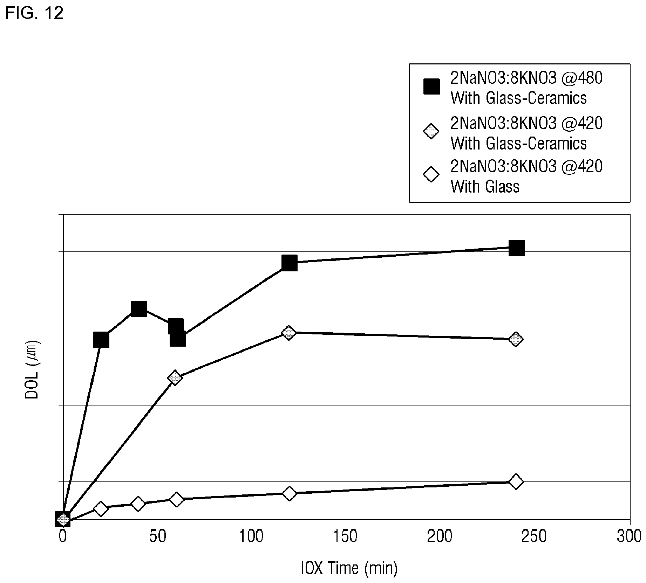

FIG. 12 is a graph illustrating the rate of compression depth formation in embodiments of a glass article with various crystallinity of crystals and various ion exchange temperature.

Referring to FIG. 12, glass-ceramics whose crystals have a crystallinity of 40% to 50% has a greater compression depth DOL at each ion exchange process time than glass whose crystals have a crystallinity of 0%. In addition, the glass-ceramics whose crystals have a crystallinity of 40% to 50% has a greater compression depth DOL at each time at a higher ion exchange process temperature.

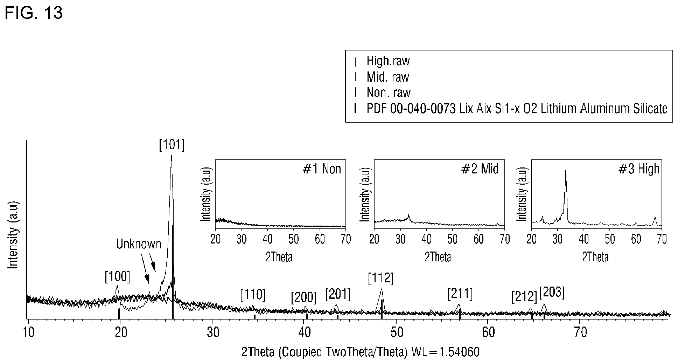

FIG. 13 is a graph illustrating an X-ray diffraction ("XRD") analysis method for determining the crystallinity of crystals according to an embodiment. In FIG. 13, the crystallinity of crystals is determined by an XRD/Rietveld analysis device which is an XRD analysis device.

In FIG. 13, 'High' indicates sample #3 whose crystals have a crystallinity of 80% in Preparation Example 1, 'Mid' indicates sample #2 whose crystals have a crystallinity of 40 to 50% in Preparation Example 1, and 'Low' indicates sample #1 whose crystals have a crystallinity of 0% in Preparation Example 1.

The XRD analysis device and an analysis method of the XRD analysis device are widely known in the art, and thus any detailed description thereof will be omitted.

Embodiments of a glass article and a display device including the glass article may have a thin thickness and may have appropriate strength. In such embodiments, an appropriate compression depth may be formed within a short time.

The invention should not be construed as being limited to the exemplary embodiments set forth herein. Rather, these exemplary embodiments are provided so that this disclosure will be thorough and complete and will fully convey the concept of the invention to those skilled in the art.

While the invention has been particularly shown and described with reference to embodiments thereof, it will be understood by those of ordinary skill in the art that various changes in form and detail may be made therein without departing from the scope of the present disclosure as defined by the following claims.

**Claims**

1. A glass article (100, 101, 102, 103) comprising:

   a glass phase (120) comprising a first structure in which a silicon atom is covalently bonded to four first oxygen atoms; and
   a plurality of crystals (110) dispersed in the glass phase (120),
   wherein the crystals (110) comprise beta-quartz crystals,
   each of the beta-quartz crystals comprises the first structure and a second structure in which an aluminum atom is covalently bonded to four second oxygen atoms, and
   a crystallinity of the beta-quartz crystals is in a range of 40% to 50%.

2. The glass article (100, 101, 102, 103) of claim 1, wherein each of the crystals (110) further comprises a first alkali metal which is bonded to the aluminum atom covalently bonded to the four second oxygen atoms.

3. The glass article (100, 101, 102, 103) of claim 2, wherein a bond between the first alkali metal and the aluminum atom comprises a bond formed through an electrostatic attraction.

4. The glass article (100, 101, 102, 103) of claim 2 or 3, wherein each of the crystals (110) further comprises a second alkali metal which is covalently bonded to a third oxygen atom.

5. The glass article (100, 101, 102, 103) of claim 4, wherein the glass phase (120) further comprises a third alkali metal which is covalently bonded to a fourth oxygen atom.

6. The glass article (100, 101, 102, 103) of at least one of claims 1 to 5, comprising:

   a first surface (US);
   a second surface (RS) opposite to the first surface (US);
   a first compressive region (CSR1) extending from the first surface (US) to a point at a first compression depth (DOC1) from the first surface (US);
   a second compressive region (CSR2) extending from the second surface (RS) to a point at a second compression depth (DOC2) from the second surface (RS); and
   a tensile region (CTR) disposed between the first compressive region (CSR1) and the second compressive region (CSR2),
   wherein the crystals (110) are dispersed in each of the first compressive region (CSR1), the second compressive region (CSR2) and the tensile region (CTR).

7. The glass article (100, 101, 102, 103) of at least one of claims 4 to 6, wherein a bond between the first alkali metal and the aluminum atom is weaker than a bond between the second alkali metal and the third oxygen atom.

8. The glass article (100, 101, 102, 103) of at least one of claims 5 to 7, wherein the bond between the first alkali metal and the aluminum atom is weaker than a bond between the third alkali metal and the fourth oxygen atom.

9. The glass article (100, 101, 102, 103) of at least one of claims 2 to 8, wherein the first alkali metal comprises lithium or sodium.

10. The glass article (100, 101, 102, 103) of at least one of claims 1 to 9, wherein the crystallinity of the beta-quartz crystals is determined by X-ray diffraction or Rietveld analysis.

11. The glass article (100, 101, 102, 103) of at least one of claims 1 to 10, further comprising:

    a nucleating agent which comprises $TiO_2$ or $ZrO_2$,
    wherein the beta-quartz crystals are formed through the nucleating agent.

12. The glass article (100, 101, 102, 103) of at least one of claims 1 to 11, wherein a transmittance of a light in a visible spectrum of 400 nm to about 700 nm in the glass article (100, 101, 102, 103) is 87% or greater.

13. The glass article (100, 101, 102, 103) of at least one of claims 1 to 12, wherein a difference between a refractive index of the glass phase (120) and a refractive index of the crystals (110) is less than 0.06.

14. The glass article (100, 101, 102, 103) of at least one of claims 1 to 13, wherein a size of each crystal (110) is in a range of 20 nm to 30 nm.

15. The glass article (100, 101, 102, 103) of at least one of claims 1 to 14, wherein a fracture toughness of the glass article (100, 101, 102, 103) is 1.0 MPa·m$^{1/2}$ or greater.

16. A display device (500) comprising:

a display panel (200) which comprises a plurality of pixels;
a cover window (100) which is disposed on the display panel (200); and
an optically clear bonding layer (300) which is disposed between the display panel (200) and the cover window (100),
wherein the cover window (100) is a glass article according to at least one of claims 1 to 15.

FIG. 1

FIG.2

FIG.3

FIG.4

FIG.5

110

$$
\begin{array}{c}
| \qquad\qquad | \qquad\qquad\qquad | \\
O \qquad\qquad O \qquad\qquad\qquad O \qquad \alpha^+ \\
| \qquad\qquad | \qquad\qquad\qquad | \\
\alpha - O - Si - O - O - Si - O - O - Al - O - \\
| \qquad\qquad | \qquad\qquad\qquad | \\
O \qquad\qquad O \qquad\qquad\qquad O \\
| \qquad\qquad | \qquad\qquad\qquad | \\
- O - Si - O - O - Al - O - O - Si - O - \\
| \qquad\qquad | \quad \alpha^+ \qquad\qquad | \\
O \qquad\qquad O \qquad\qquad\qquad O \\
| \qquad\qquad | \qquad\qquad\qquad |
\end{array}
$$

FIG.6

FIG.7

FIG.8

FIG.9

FIG. 10

| CRYSTALLINITY | Beta-Quartz | |
| --- | --- | --- |
| | BEFORE TEMPERING | AFTER TEMPERING |
| 0% | | |
| 40~50% | | |
| 80% | | |

FIG. 11

FIG. 12

Legend:
- ■ 2NaNO3:8KNO3 @480 With Glass-Ceramics
- ◈ 2NaNO3:8KNO3 @420 With Glass-Ceramics
- ◇ 2NaNO3:8KNO3 @420 With Glass

Y-axis: DOL ($\mu m$)

X-axis: IOX Time (min)

FIG. 13

Europäisches
Patentamt

European
Patent Office

Office européen
des brevets

## EUROPEAN SEARCH REPORT

Application Number

EP 20 21 4805

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2016 101066 B3 (SCHOTT AG [DE]) 23 February 2017 (2017-02-23) * paragraphs [0071], [0092], [0101]; figure 5 * | 1-5, 7-14,16 | INV. C03C3/087 C03C3/097 C03C4/00 C03C10/14 C03C21/00 |
| X | JP 2006 008488 A (NIPPON ELECTRIC GLASS CO) 12 January 2006 (2006-01-12) * the whole document * | 1-5, 7-11,13, 14 | |
| X | US 3 973 972 A (MULLER GERD) 10 August 1976 (1976-08-10) * column 3, line 29 - line 37 * * column 4, line 15 - line 25 * | 1-5,7-14 | |
| A | US 2016/280589 A1 (BEALL GEORGE HALSEY [US] ET AL) 29 September 2016 (2016-09-29) * the whole document * | 1-16 | |
| A | US 4 126 476 A (GROSSMAN DAVID G) 21 November 1978 (1978-11-21) * the whole document * | 1-16 | TECHNICAL FIELDS SEARCHED (IPC) |
| A | US 2012/135848 A1 (BEALL GEORGE HALSEY [US] ET AL) 31 May 2012 (2012-05-31) * the whole document * | 1-16 | C03C |

The present search report has been drawn up for all claims

| Place of search | Date of completion of the search | Examiner |
|---|---|---|
| Munich | 20 April 2021 | King, Ruth |

EPO FORM 1503 03.82 (P04C01)

## ANNEX TO THE EUROPEAN SEARCH REPORT
## ON EUROPEAN PATENT APPLICATION NO.

EP 20 21 4805

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2021

| Patent document cited in search report | Publication date | Patent family member(s) | Publication date |
|---|---|---|---|
| DE 102016101066 B3 | 23-02-2017 | DE 102016101066 B3<br>DE 102017101114 A1<br>EP 3196174 A1<br>JP 2017137233 A | 23-02-2017<br>27-07-2017<br>26-07-2017<br>10-08-2017 |
| JP 2006008488 A | 12-01-2006 | NONE | |
| US 3973972 A | 10-08-1976 | AT 339523 B<br>CH 605441 A5<br>DE 2347591 A1<br>FR 2244727 A1<br>GB 1440172 A<br>IT 1020727 B<br>JP S5133117 A<br>JP S5435220 B2<br>NL 7412257 A<br>US 3973972 A | 25-10-1977<br>29-09-1978<br>03-04-1975<br>18-04-1975<br>23-06-1976<br>30-12-1977<br>22-03-1976<br>01-11-1979<br>25-03-1975<br>10-08-1976 |
| US 2016280589 A1 | 29-09-2016 | CN 107646024 A<br>EP 3274308 A1<br>JP 2018513091 A<br>KR 20170130498 A<br>TW 201641462 A<br>TW 202033469 A<br>US 2016280589 A1<br>US 2018155235 A1<br>WO 2016154235 A1 | 30-01-2018<br>31-01-2018<br>24-05-2018<br>28-11-2017<br>01-12-2016<br>16-09-2020<br>29-09-2016<br>07-06-2018<br>29-09-2016 |
| US 4126476 A | 21-11-1978 | NONE | |
| US 2012135848 A1 | 31-05-2012 | EP 2646381 A2<br>JP 6081920 B2<br>JP 2013544229 A<br>TW 201228980 A<br>US 2012135848 A1<br>US 2015044474 A1<br>US 2016368818 A1<br>WO 2012075068 A2 | 09-10-2013<br>15-02-2017<br>12-12-2013<br>16-07-2012<br>31-05-2012<br>12-02-2015<br>22-12-2016<br>07-06-2012 |

EPO FORM P0459

For more details about this annex : see Official Journal of the European Patent Office, No. 12/82